(19) Europäisches Patentamt
European Patent Office
Office européen des brevets

(11) Veröffentlichungsnummer : **0 047 898**
**B1**

(12) **EUROPÄISCHE PATENTSCHRIFT**

(45) Veröffentlichungstag der Patentschrift : **16.04.86**

(51) Int. Cl.[4] : **G 01 N 27/46**

(21) Anmeldenummer : **81106728.9**

(22) Anmeldetag : **28.08.81**

(54) **Elektrochemischer Sensor zum Nachweis reduzierender Gase insbesondere von Kohlenmonoxid, Hydrazin und Wasserstoff in Luft.**

(30) Priorität : **09.09.80 DE 3033796**

(43) Veröffentlichungstag der Anmeldung : **24.03.82 Patentblatt 82/12**

(45) Bekanntmachung des Hinweises auf die Patenterteilung : **16.04.86 Patentblatt 86/16**

(84) Benannte Vertragsstaaten : **BE CH DE FR GB IT LI NL SE**

(56) Entgegenhaltungen :
**DE-A- 2 316 365**
**DE-A- 2 553 278**
**FR-A- 2 291 493**
**FR-A- 2 382 011**
**US-A- 4 049 503**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Kitzelmann, Dieter, Dr.**
**Im Michelsfeld 11 A**
**D-5300 Bonn 3 (DE)**
Erfinder : **Deprez, Jacques**
**Birkenweg 3**
**D-5020 Frechen (DE)**

**EP 0 047 898 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung geht aus von einem elektrochemischen Sensor zur Messung von Kohlenmonoxid, Wasserstoff oder Hydrazin in der Umgebungsluft mit einer der Umgebungsluft ausgesetzten polarisierbaren katalytisch aktiven Meßelektrode, die über einen wäßrigen sauren Elektrolyten mit einer unpolarisierbaren Gegenelektrode in Verbindung steht. Ein derartiger Sensor zur Bestimmung von Kohlenmonoxid ist aus DE-A-2 316 365 bekannt.

Zweck

Bei der Immissions- und teilweise auch Emisionsüberwachung sind heute extrem niedrige Gasspurenkonzentrationen zu erfassen. Dazu bedarf es höchst empfindlicher Meßverfahren. So ist die Begrenzung der Exposition von Kohlenmonoxid eines der umfangreichsten und dringensten Probleme in vielen Bereichen der Industrie. Weiterhin treten Umweltbelästigungen, verursacht durch Kohlenmonoxid, durch die unvollständige Verbrennung von z. B. Motorkraftstoffen oder Hausbrand, auf. Wegen der bestehenden Giftigkeit oder Explosionsgefahr bei gleichzeitig nicht möglicher Erkennbarkeit durch Farbe, Geruch oder Geschmack ist eine möglichst kontinuierliche Erfassung der Konzentrationen notwendig. Aufgabe der Erfindung war es daher, zur Messung der Schadstoffkonzentrationen einen Gasdetektor zu entwickeln. Insbesondere für technisch ungeschultes Personal steht die Forderung nach einer relativ leicht zu bedienenden Einrichtung, welche nach einem einfachen robusten Meßprinzip arbeitet und nach dem Einschalten sofort meßbereit ist.

Stand der Technik

Neben den rein chemischen und physikalischen Meßverfahren werden häufig elektrochemische Methoden zur Bestimmung von Kohlenmonoxid, Wasserstoff und Hydrazin verwendet. So werden zur Messung von Kohlenmonoxid Meßzellen in Drei-Elektroden-Anordnungen vorgeschlagen (s. H.W. Bay, K.F. Blurton, H.C. Lieb, H.G. Oswin, International Laboratory, Vol. 1, 1972, Nr. 5, Seiten 37 bis 41 ; US-Patent 3 824 167 (1974) ; US-Patent 4 013 522 (1977) ; Deutsche Offenlegungsschrift 2 155 935 (1972)) analog den in der Elektrochemie üblichen Halbzellenanordnungen, bei denen Kohlenmonoxid in wäßrigen Lösungen an Edelmetallelektroden, vornehmlich Platin, bei Potentialen von + 0,9 bis + 1,5 V gegen die Normal-Wasserstoffelektrode nach folgender Gleichung oxidiert wird

$$CO + H_2O \rightarrow CO_2 + 2\,H^+ + 2e$$

Die Meßzelle besteht aus Meßelektrode, Gegenelektrode und einer Bezugselektrode. Mit Hilfe eines elektronischen Potentiostaten wird das Potential der Meßelektrode zur Bezugselektrode eingestellt und im gewünschten Bereich konstant gehalten. An der Meßelektrode wird das herandiffundierende Kohlenmonoxid oxidiert. Dabei wird ein elektrischer Strom erzeugt, der der CO-Konzentration proportional ist.

Alternative Vorschläge beinhalten Meßzellen, die aus Zwei-Elektroden-Anordnungen bestehen, wobei an der Anode CO oxidiert wird und die Gegenelektrode (Kathode) entweder eine aktive Masse (Oxide oder Mischoxide der Übergangs-elemente) enthält, deren Redoxpotential die Anode auf das gewünschte Elektrodenpotential von + 0,9 bis 1,5 V polarisiert (s. DE-A-23 16 365), oder als Gaselektrode ausgebildet ist, an der z. B. Luftsauerstoff reduziert wird. Dabei wird die Kathode so dimensioniert, daß sich ihr Potential bei den auftreten den Meßströmen nicht verändert.

In der US-A-4 049 503 werden ebenfalls elektrochemische Meßzellen auf der Basis einer Zwei-Elektroden-Anordnung beschrieben, die mit einem wasserfreien, polymeren Gelelektrolyt arbeiten. Diese Zellen sind jedoch nicht katalytisch aktiviert und daher für die Messung von CO ungeeignet.

Die Anordnungen mit Bezugselektrode bzw. als Bezugspunkt arbeitender Gegenelektrode arbeiten nicht ganz zufriedenstellend, weil sich über einen längeren Zeitraum die Bezugspotentiale ändern. Dies bedeutet, daß ebenfalls das Potential der Meßelektrode verändert wird, wodurch es zu einer Erhöhung des Grundstromes in positiver oder negativer Richtung, verursacht durch auftretende Luftsauerstoffreduktion bzw. durch Bildung von Oxidschichten auf der Meßelektrodenoberfläche kommen kann. Die kaum erreichbare Potentialkonstanz bei Verwendung einer Bezugselektrode erhöht daher die Störanfälligkeit des Meßsystems.

Bei Sensoren, die wie in der beschriebenen Erfindung in tragbaren Gaswarngeräten oder in kleinen Fernmeßköpfen eingesetzt werden, ist es zweckmäßig, den flüssigen Elektrolyten durch Festelektrolyte oder durch Fixierung des Elektrolyten zu ersetzen, um ein Auslaufen der häufig als Elektrolyt verwendeten Säure zu vermeiden. Eine bekannte Methode ist die Immobilisierung durch einfaches Aufsaugen in z. B. Asbestmehl, Quarzmehl oder in einer porösen organischen oder anorganischen Matrix, z. B. poröse PVC-Filterscheiben oder poröse Glasfilterpapiere. Weiterhin können feinkörnige Ionenaustauscher, die mit dem wäßrigen Elektrolyten aufgequollen werden, zur Fixierung des Elektrolyten verwendet werden. Beim Betrieb derartiger Sensorzellen verringert sich infolge von Wasserverlusten durch Verdampfung das Volumen des Elektrolyten, wodurch der Kontakt zwischen Elektrode und

Elektrolyt nicht mehr aufrechterhalten werden kann und dadurch die Meßempfindlichkeit herabgesetzt wird.

Der Erfindung liegt die Aufgabe zugrunde, elektrochemische Sensoren zur Messung von Kohlenmonoxid, Hydrazin oder Wasserstoff in Luft auf der Basis immobilisierter Elektrolyten mit schneller Ansprechzeit und möglichst geringem Grundstrom zu entwickeln.

Diese Aufgabe wird erfindungsgemäß dadurch gelöst, daß die Gegenelektrode als Luft-Sauerstoff-Elektrode ausgebildet ist, der Elektrolyt aus einem wäßrigen, gelartigen, polymeren Klebstoff besteht, in dem ionogene Substanzen gelöst sind und daß die Meßelektrode als stromableitende, den Katalysator in feinverteilter Form enthaltende Matrix ausgebildet ist, so daß durch die adhäsiven Eigenschaften des Elektrolyten zusammen mit der Meßelektrode eine Dreiphasengrenze Gas-Katalysator-Elektrolyt gebildet ist.

Die saure wäßrige Phase des Elektrolyten ist ein homogenes System, d. h. die wäßrigen sauren Bestandteile werden bei der Vernetzung mit einpolymerisiert. Die stromerzeugende elektrochemische Reaktion findet an denjenigen Katalysatorpartikeln statt, die mit einem Teil ihrer Oberfläche in den Elektrolyten eingebettet sind, jedoch mit dem anderen Teil in die Umgebungsluft hinausragen und außerdem mit der Matrix in elektrischem Kontakt stehen. Maßgebend für den Meßeffekt ist also die oben erwähnte Dreiphasengrenze.

Unter « Matrix » wird hier ein poröses Flächengebilde, z. B. ein Vlies oder Maschengitter, aus elektrisch leitenden Materialien, verstanden.

Infolge der guten adhäsiven Eigenschaften der Elektrolytoberfläche ist eine gute mechanische Haftung der beiden Elektroden möglich. Durch den innigen Kontakt zwischen Elektroden und Elektrolyt ist die Ausbildung der für die elektrochemische Reaktion wichtigen Dreiphasengrenze optimal. Bei herkömmlichen Gasdiffusions-elektroden mit einer Dreiphasenzone-Elektrode-Elektrolyt-Gas muß das Gas der Elektrode entweder unter Druck zugeführt werden, oder man muß eine Hydrophobierung der Elektrode vornehmen, um ein Vollaufen des Porensystems der Elektrode mit Elektrolyt und ein Auslaufen des Elektrolyten zu verhindern (s. W. Vielstich, Brennstoffelemente, Seiten 4 und 5, Verlag Chemie, Weinheim 1965).

Ein prinzipieller Aufbau der Meßzelle ist in Fig. 1 dargestellt und soll im folgenden am Beispiel der CO-Zelle näher beschrieben werden :

In einem zylindrischen Körper 1 aus Kunststoff, z. B. Polypropylen, befindet sich der wäßrige Gelelektrolyt 3. Die Meßelektrode 2 sowie die Gegenelektrode 4 sind nicht als Gasdiffusionselektroden ausgebildet, wie sie bei Brennstoffzellen bekannt sind, sondern sind durch die adhäsiven Eigenschaften des Gelelektrolyten mit diesem fest verbunden. Meß- sowie Gegenelektrode können je nach Meßaufgabe unterschiedlich aufgebaut sein und verschiedenartige Katalysatoren enthalten. Sie werden später noch im einzelnen besschrieben werden.

Die Meßkomponente (CO) gelangt durch eine Diffusions-barriere 5, die hier als Meßblende ausgebildet ist, an die Meßelektrode 2, wo eine Oxidation zu $CO_2$ stattfindet. Gleichzeitig wird an der Gegenelektrode der im Luftraum 6 vorhandene Sauerstoff zu Wasser reduziert. Der Luftraum ist so dimensioniert, daß der an der Elektrode verbrauchte Luftsauerstoff nur eine geringfügige Veränderung des Sauerstoffpartialdruckes in der Luft verursacht. Da die sich ergebenden Ströme im Nanoampere-Bereich liegen, werden sie mit Hilfe einer Stromverstärkerschaltung verstärkt. Zu diesem Zweck werden Meß- und Gegenelektrode mit einem geeigneten Meßverstärker 7 verbunden.

Zum besseren Verständnis der erfindungsgemäß hergestellten Sensoren sollen die folgenden Beispiele zur Messung von CO, $H_2$ und Hydrazin dienen. Naturgemäß eignen sich diese Zellen ebenfalls zum Nachweis derjenigen reduzierenden Stoffe, die als Querempfindlichkeiten bei den folgenden Beispielen auftreten. Die Beispiele beschreiben die Herstellung der Einzelelektroden für die elektrochemische CO-, $H_2$- bzw. Hydrazinoxidation sowie der entsprechenden Gegenelektroden. Weiterhin wird die Herstellung des erfindungsgemäßen Elektrolyten erläutert. Die Beispiele zeigen, daß die Verwendung der erfindungsgemäßen Zelle zu einer robusten und wartungsarmen Gasmeßzelle von höchster Empfindlichkeit führt.

## Beispiel 1

In einem Becherglas wird eine Mischung bestehend aus 15 g Acrylsäureamid, 12,5 g Harnstoff, 7,5 g Acetamid, 2,5 g Propionsäurenitril und 50 g einer 30 %igen Phosphorsäure auf 60 °C erhitzt und durch Zugabe von 2,5 ml einer gesättigten Kaliumperoxidisulfatlösung die Lösungspolymerisation eingeleitet. Nach dem Polymerisationsbeginn wird die nun dickflüssige Mischung in einen Zylinder von 1,6 cm Innendurchmesser und 2 cm Höhe gegossen. Nach beendeter Polymerisation und Abkühlung geliert der Elektrolyt zu einem festen klebrigen Gel.

Aus einem ca. 0,2 mm dicken Blatt aus Kohlevlies werden 2 Scheiben von 1,6 cm Durchmesser ausgestanzt und jeweils mit einem dünnen Platindraht kontaktiert. Diese als Stromableiter fungierenden Scheiben werden auf die beidseitigen Elektrolytoberflächen aufgesetzt und durch die guten adhäsiven Eigenschaften des Gels fest verankert. Anschließend wird vorteilhafterweise feinverteiltes Platinmoor auf den mit den Kohlevliesen versehenen Elektrolyten ähnlich dem Siebdruckverfahren aufgebracht, indem ca. 5 mg Platin pro $cm^2$ durch ein feinmaschiges Kunststoffnetz aufgesiebt wurde.

Die entstandene Meßzelle wurde auf der Meßelektrodenseite mit einer Diffusionsbarriere in Form einer Lochblende von 5 × 0,3 mm Durchmesser versehen und auf der Gegenelektrodenseite (Kathode) mit einer Kunststoffkappe abgedichtet. Das Volumen des Luftraumes über der Kathode betrug ca. 1 $cm^3$. Der Meßeffekt liegt für CO in der Größenordnung von 8 nA/ppm.

Beispiel 2

Meßzellen nach dem Beispiel 1 wurden hergestellt, indem zusätzlich zum beschriebenen Polymeransatz 50 g $Mg(ClO_4)_2$ als hygroskopische Substanz zugesetzt werden. Die Meßzellen zeigten das gleiche Verhalten wie in Beispiel 1, jedoch trat auch nach 3 Monaten nur eine geringfügige Schrumpfung des Gels infolge von Wasserverlusten auf.

Beispiel 3

Eine Zelle wurde hergestellt, indem der Gelbildner zunächst getrennt in einer Lösungsmittelpolymerisation hergestellt wurde. Dazu wurde eine Mischung bestehend aus 15 g Acrylsäureamid, 12,5 g Harnstoff, 7,5 g Acetamid und 2,5 ml Propionsäurenitril in 200 ml Wasser bei 60 °C durch Zusatz von 2,5 ml einer gesättigten $K_2S_2O_8$-Lösung umgesetzt. Das Umsetzungsprodukt wurde mit Aceton ausgefällt, abfiltriert und getrocknet. 20 g dieses Umsetzungsproduktes wurde mit der Elektrolytlösung, bestehend aus 50 ml 2n Schwefelsäure und 50 g $Mg(ClO_4)_2$ versetzt und in den Zellenkörper eingegossen. Nach Beendigung der Gelbildung wurden die Elektrolytoberflächen beidseitig mit 0,2 mm dünnen Kohlefließscheiben bestückt, die vorher mit einem dünnen Platindraht kontaktiert worden waren. Anschließend wurde wie in Beispiel 1 auf beide Kohlevliese 5 mg Platinmoor pro $cm^2$ aufgebracht. Die entstandene Meßzelle wurde wie im Beispiel 1 mit Diffusionsbarriere und Kunststoffkappe versehen. Die Meßempfindlichkeit für CO betrug ca. 8 nA/ppm.

Beispiel 4

Eine Meßzelle wurde hergestellt unter Verwendung von Kohlevlies als Ableitmaterial und Platinmoor als Katalysator. Zum Binden des Platinmoors auf dem Vlies wurde das Vlies vorher in einer verdünnten Polymerlösung, bestehend aus 10 Teilen Wasser und 1 Teil Polyacrylamid getränkt und anschließend mit Platinmoor (5 mg Platin pro $cm^2$) gleichmäßig beschichtet. Die so behandelten Elektroden wurden an der Luft getrocknet und danach auf dem Gelelektrolyten beidseitig aufgeklebt. Der wäßrige Gelelektrolyt bestand aus 2n Schwefelsäure und dem Umsetzungsprodukt von Polyacrylamid, Harnstoff und Acetamid, welcher wie im Beispiel 1 hergestellt wurde.

Die entstandene Meßzelle mit einem Durchmesser von 1,6 cm und einer Höhe von 2 cm wurde wie im Beispiel 1 mit Diffusionsbarriere (Lochblende) versehen und kathodenseitig mit einer Kunststoffkappe abgedichtet. Die Zelle zeigte gegenüber Kohlenmonoxid eine Meßempfindlichkeit von 12 nA/ppm und eine Verzugszeit $t_{90}$ von ca. 2 Minuten. Gegenüber Wasserstoff betrug die Meßempfindlichkeit 20 nA/ppm und die Verzugszeit $t_{90}$ ca. 90 Sekunden.

Beispiel 5

Eine Meßzelle wurde hergestellt, indem ein Gelelektrolyt auf der Basis Polyacrylamid und Phosphorsäure hergestellt wurde. Der Gelektrolyt wurde durch Polymerisation bei 70 °C von Acrylsäureamid (10 Gew.-%) in einer 60 gew.-%igen Phosphorsäurelösung unter Zusatz von 1 Gew.-% $K_2S_2O_8$-Lösung angefertigt. Zur Elektrodenherstellung wurde Kohlevlies als Ableitmaterial und Platinmoor als Katalysator verwendet. Zum Binden des Platinmoors auf dem Vlies wurde das Vlies vorher in einer verdünnten Polymerlösung, bestehend aus 20 Teilen Wasser und 1 Teil Polyacrylamid, getränkt und anschließend mit Platinmoor (5 mg Pt pro $cm^2$) gleichmäßig beschichtet. Nach einer wiederholten Imprägnierung mit der verdünnten Gelelektrolytlösung zur Fixierung des Platinmoorpulvers wird die so erhaltene Elektrode in einem Exsikkator getrocknet. Dann wurden 2 Scheiben von 1,6 cm Durchmesser ausgestanzt und jeweils mit einem dünnen Platindraht kontaktiert. Die so erhaltenen Elektroden wurden beidseitig auf den Elektrolytoberflächen aufgesetzt und durch leichtes Andrücken fest mit dem Gel verankert.

Die Meßzelle hatte gegenüber CO eine Meßempfindlichkeit von 12 nA/ppm und eine Verzugszeit $t_{90}$ von ca. 2 Minuten.

Beispiel 6

Die Messung von Hydrazingasspuren erfolgte mit einer ähnlichen Bauausführung des Meßsensors wie in den obigen Beispielen. Der Elektrolyt entsteht durch Polymerisation von 15 g Acrylsäureamid, 12,5 g Harnstoff, 1,5 ml Formaldehydlösung (35 Gew.-%) in einer Lösung von 60 g Mg $(C10_4)_2$ in 50 ml Wasser. Als Arbeits- bzw. Meßelektrode dient ein Kohlevlies, auf dem eine dünne Goldschicht in Vakuum aufgedampft wurde.

Als Gegenelektrode dient eine ausgebildete Luftsauerstoffelektrode mit Platin als Katalysator, deren Herstellung in den Beispielen 1 bis 6 beschrieben ist. Die spezifische Empfindlichkeit gegenüber Hydrazin beträgt etwa 1 000 nA/ppm $N_2H_4$.

**Patentansprüche**

1. Elektrochemischer Sensor zur Messung von Kohlenmonoxid, Wasserstoff oder Hydrazin in der Umgebungsluft, mit einer der Umgebungsluft ausgesetzten katalytisch aktiven Meßelektrode (2), die über einen wäßrigen sauren Elektrolyten (3) mit einer unpolarisierbaren Gegenelektrode (4) in Verbindung steht, dadurch gekennzeichnet, daß die Gegenelektrode (4) als Luft-Sauerstoff-Elektrode ausgebildet ist, daß der Elektrolyt (3) aus einem wäßrigen gelartigen polymeren Klebstoff besteht, in dem ionogene Substanzen gelöst sind und daß die Meßelektrode (2) als stromableitende, den Katalysator in feinverteilter Form enthaltende Matrix ausgebildet ist, so daß durch die adhäsiven Eigenschaften des Elektrolyten (3) zusammen mit der Meßelektrode (2) eine Dreiphasengrenze Gas-Katalysator-Elektrolyt gebildet ist.

2. Sensor nach Anspruch 1, dadurch gekennzeichnet, daß wenigstens eine Elektrode aus einem engmaschigen stromleitenden Gitter besteht, das auf den Gelelektrolyten aufgedrückt ist und in die Zwischenräume ein Katalysatorpulver aufgebracht ist, welches durch die adhäsiven Eigenschaften des Gels fixiert wird.

3. Sensor nach Ansprüchen 1 bis 2, insbesondere zur Messung von Kohlenmonoxid und Wasserstoff, dadurch gekennzeichnet, daß die Elektroden aus einem Graphitvlies und der Katalysator aus feinverteiltem Platin bestehen.

4. Sensor nach Ansprüchen 1 und 2, insbesondere zur Messung von Hydrazin, dadurch gekennzeichnet, daß die Meßelektrode aus einem Goldvlies und die Gegenelektrode aus einem mit Platinmoor beschichteten Kohlevlies bestehen.

5. Sensor nach Ansprüchen 1 bis 4, dadurch gekennzeichnet, daß dem Elektrolyten eine hygroskopische Substanz zugesetzt ist.

**Claims**

1. Electrochemical sensor for the measurement of carbon monoxide, hydrogen or hydrazine in ambient air, having a catalytically active measuring electrode (2) exposed to the ambient air and communicating through an aqueous acid electrolyte (3) with a nonpolarisable counter electrode (4), characterised in that the counter electrode (4) is in the form of an air-oxygen electrode, in that the electrolyte (3) consists of an aqueous gelatinous polymeric adhesive in which ionogenic substances are dissolved, and in that the measuring electrode (2) is in the form of a current-abducting matrix which contains the catalyst in a finely divided form, so that a three phase boundary of gas-catalyst-electrolyte is formed together with the measuring electrode (2) owing to the adhesive properties of the electrolyte (3).

2. Sensor according to Claim 1, characterised in that at least one electrode consists of a close-meshed, electrically conductive grid which is applied to the gel electrolyte by pressure, and a catalyst powder is applied in the gaps and fixed by the adhesive properties of the gel.

3. Sensor according to Claims 1 and 2, in particular for the measurement of carbon monoxide and hydrogen, characterised in that the electrodes consist of a graphite fleece and the catalyst of finely divided platinum.

4. Sensor according to Claims 1 and 2, in particular for the measurement of hydrazine, characterised in that the measuring electrode consists of a gold fleece and the counter electrode of a carbon fleece coated with platinum black.

5. Sensor according to Claims 1 to 4, characterised in that a hygroscopic substance is added to the electrolyte.

**Revendications**

1. Senseur électrochimique pour la mesure de l'oxyde de carbone, de l'hydrogène ou de l'hydrazine dans l'air environnant, avec une électrode de mesure (2) catalytiquement active exposée à l'air environnant, qui est en liaison par un électrolyte acide aqueux (3) avec une contre-électrode non polarisable (4), caractérisé en ce que la contre-électrode (4) est constituée en électrode à oxygène atmosphérique, en ce que l'électrolyte (3) consiste en un adhésif polymère gélifié aqueux dans lequel sont dissoutes des substances ionogènes et en ce que l'électrode de mesure (2) est constituée sous forme de matrice de décharge de courant qui contient le catalyseur sous une forme finement divisée, en sorte que par les propriétés adhésives de l'électrolyte (3), conjointement avec l'électrode de mesure (2), se constitue une limite de trois phases gaz-catalyseur-électrolyte.

2. Senseur selon la revendication 1, caractérisé en ce qu'au moins une électrode consiste en une grille à mailles étroites conductrice du courant, qui est pressée sur l'électrolyte gélifié et en ce qu'est

appliqué dans les espaces intermédiaires une poudre de catalyseur qui est fixée par les propriétés adhésives du gel.

3. Senseur selon les revendications 1 à 2, en particulier pour la mesure de l'oxyde de carbone et de l'hydrogène, caractérisé en ce que les électrodes consistent en un non-tissé de graphite et le catalyseur en du platine finement divisé.

4. Senseur selon les revendications 1 et 2, en particulier pour la mesure de l'hydrazine, caractérisé en ce que l'électrode de mesure consiste en un non-tissé d'or et la contre-électrode en un non-tissé de carbone enduit de mousse de platine.

5. Senseur selon les revendications 1 à 4, caractérisé en ce qu'on ajoute à l'électrolyte une substance hydroscopique.

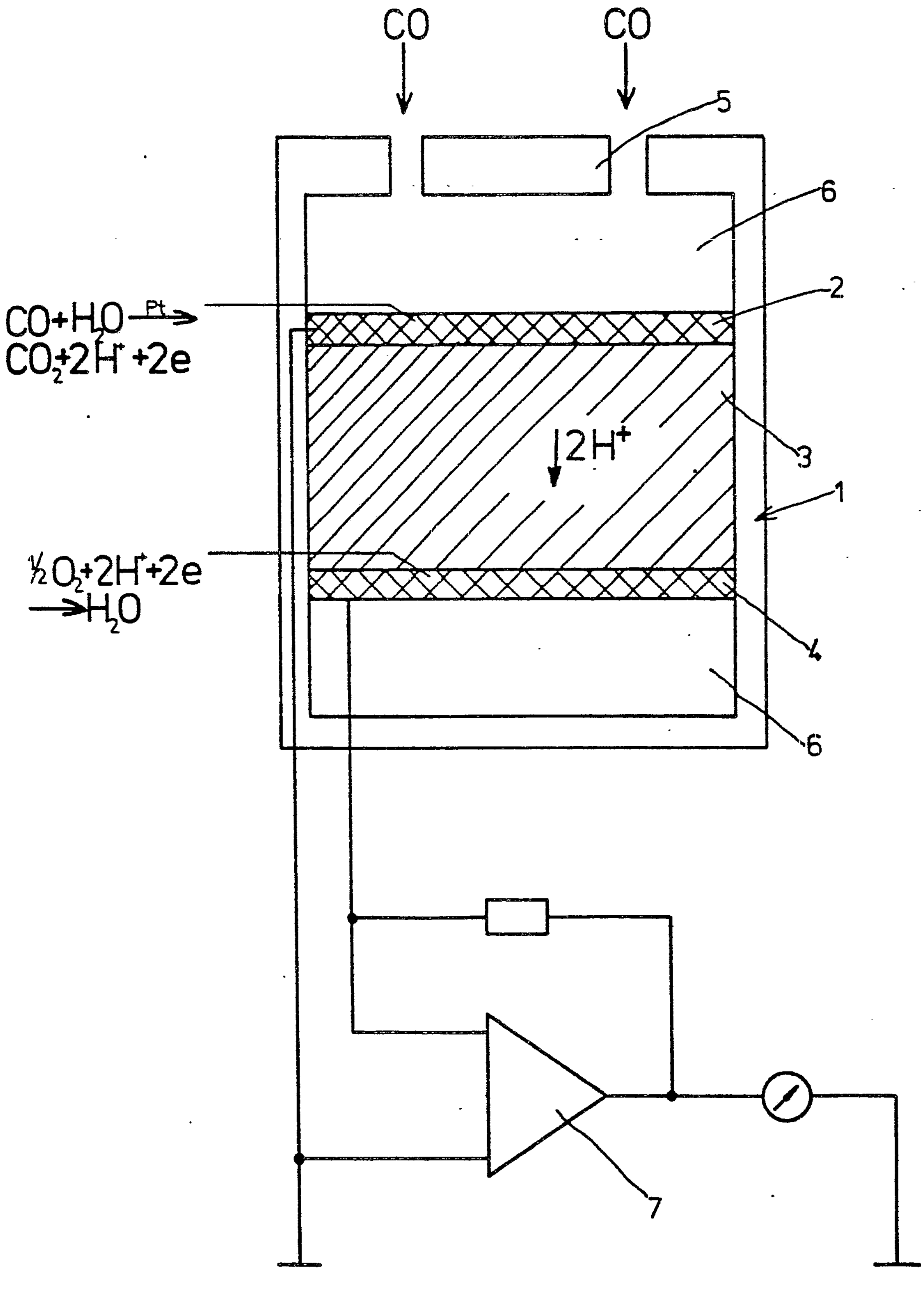

CO
CO
5
6
2
$CO+H_2O \xrightarrow{Pt} CO_2+2H^++2e$
3
$2H^+$
1
$\frac{1}{2}O_2+2H^++2e \rightarrow H_2O$
4
6
7